# EUROPÄISCHE PATENTSCHRIFT

(11) **EP 2 805 131 B1**
(45) Veröffentlichungstag und Bekanntmachung des Hinweises auf die Patenterteilung: **24.08.2016**
(21) Anmeldenummer: 13700318.2
(22) Anmeldetag: 16.01.2013
(51) Int. Cl.: G01B 9/02, G01C 15/00, G01B 9/021, G03H 1/00, G01B 11/26, G03H 1/30

(54) **VERFAHREN, VORRICHTUNG UND COMPUTERPROGRAMM ZUM MESSEN EINES WINKELS ZWISCHEN ZWEI RÄUMLICH VONEINANDER ENTFERNTEN ELEMENTEN**
METHOD, DEVICE AND COMPUTER PROGRAM FOR MEASURING AN ANGLE BETWEEN TWO SEPARATED ELEMENTS AND ITS USE
PROCÉDÉ, APPAREIL ET PRODUIT DE PROGRAMME INFORMATIQUE DE MESURE D'UN ANGLE ENTRE DEUX ÉLÉMENTS ÉLOIGNÉS L'UN DE L'AUTRE ET SON UTILISATION

(30) Priorität: 17.01.2012 EP 12151437
(43) Veröffentlichungstag der Anmeldung: 26.11.2014
(73) Patentinhaber: Hexagon Technology Center GmbH, 9435 Heerbrugg (CH)
(72) Erfinder: PETTERSSON, Bo, L-1279 Luxembourg (LU); PRZYGODDA, Frank, D-88131 Lindau (DE); SIERCKS, Knut, CH-9402 Mörschwil (CH)
(74) Vertreter: Gyaja, Christoph Benjamin
(86) Internationale Anmeldenummer: PCT/EP2013/050761
(87) Internationale Veröffentlichungsnummer: WO 2013/107780

(56) Entgegenhaltungen:
- JP-A- 6 229 756
- JP-A- 57 100 304
- JP-A- 61 165 611
- JP-A- 2001 118 254
- JP-A- 2011 164 493
- US-A- 4 227 807
- US-A1- 2009 180 107

## Beschreibung

Die Erfindung betrifft ein Verfahren zum Messen eines Winkels zwischen zwei räumlich voneinander entfernten Elementen nach dem unabhängigen Anspruch 1.

Das Bestimmen von Winkeln und Richtungen ist in vielen Anwendungsbereichen wie der Geodäsie, im Hoch- und Tiefbau, der industriellen Automationstechnik, usw. gefordert. Dabei werden hohe Ansprüche an die Messgenauigkeit, die Messgeschwindigkeit und den Grad der Verfügbarkeit, und all dies auch unter rauen Umweltbedingungen, gestellt.

Die JP 57100304 offenbart ein Winkelmessgerät, das einen punktförmigen Objektlichtstrahl und als Alternative zu einer schmutz- und schadensanfälligen optischen Linse ein zweidimensionales Hologramm verwendet. Das Hologramm ist dazu in eine flache Platte eingeschrieben. Demgemäss ist der Transmissionsgrad nur von zwei Raumrichtungen abhängig. Genutzt wird die entsprechende Abhängigkeit der Lage in einer Ebene des realen Bildes des Objektlichtstrahlhologramms vom Einfallswinkel des Lichtstrahls. Die Lage des Punktbildes ändert sich bei einer entsprechenden Einfallswinkeländerung kontinuierlich. Sie wird mit einem Positionssensor erfasst und daraus auf den jeweiligen Einfallswinkel rückgeschlossen. Die DE 3424806A1 beschreibt eine Messeinrichtung zum berührungslosen Erfassen einer Relativposition zwischen einem ersten Element und einem zweiten Element, das anders als JP 57100304 Winkel über das Auslesen eines Codes ermittelt. Solch ein Element kann Bestandteil einer Präzisionsmaschine sein, auch kann es eine Geräteskala eines optischen Instruments sein.

Die beiden Elemente sind räumlich über eine Distanz von beispielsweise 100m voneinander entfernt. Das erste Element weist einen Code-Träger auf, das zweite Element weist einen Code-Leser mit dem Code-Leser nachgeordneten Rechner auf. Der Code-Leser erfasst ein eindimensionales Code-Muster des Code-Trägers und übermittelt für ein erfasstes Code-Muster ein Code-Signal an den Rechner. Der Rechner weist Mittel zur Quantisierung des übermittelten Code-Signals und zum Vergleich mit einem gespeicherten Code-Muster sowie zur Errechnung der Relativposition zwischen dem ersten Element und dem zweiten Element aus dem Ergebnis des Vergleichs auf.

Die Aufgabe der Erfindung besteht darin, ein verbessertes Verfahren zum Messen eines Winkels zwischen zwei räumlich voneinander entfernten Elementen bereitzustellen.

Die Aufgabe wird durch die Merkmale des unabhängigen Anspruchs 1 gelöst.

Erfindungsgemäß weist das Verfahren zum Messen eines Winkels zwischen zwei räumlich voneinander entfernten Elementen, die Schritte auf: a) Bereitstellen eines Multiplexhologramms mit mehreren Interferenzmustern, mindestens zwei Interferenzmuster weisen unterschiedliche Einfallswinkel einer Objektlichtwelle auf eine Hologrammebene auf, die Einfallswinkel sind computerlesbar datengespeichert; b) Anordnen des Multiplexhologramms in einer ersten Elementebene an einem ersten Element; c) Beleuchten des Multiplexhologramms mit einer Referenzlichtwelle; d) Anordnen eines Lichtdetektors in einer zweiten Elementebene an einem zweiten Element; e) Erfassen einer an einem Interferenzmuster gebeugten Referenzlichtwelle mit dem Lichtdetektor; f) Bilden eines Intensitätsmusters aus der erfassten gebeugten Referenzlichtwelle; g) Zuordnen des computerlesbar datengespeicherten Einfallswinkels zum Intensitätsmuster; und h) Berechnen eines Winkels zwischen der ersten Elementebene und der zweiten Elementebene aus dem zugeordneten Einfallswinkel.

In der vorliegenden Erfindung wird unter einem Intensitätsmuster eine flächenhaft ausgedehnte Anordnung einer Vielzahl von Formen, z.B. Quadrate oder Linien, verstanden, die eine vom Hintergrund, auf dem sie platziert sind, unterscheidbare Eigenschaft aufweisen. Eine solche Eigenschaft ist der Helligkeitswert, der Farbwert u.a. Ausgeprägt ist ein solches Intensitätsmuster bspw. als eine Anordnung von 500 schwarzen Quadraten, die sich teilweise berühren können, auf einer hellen Rechtecksfläche als Hintergrund, wodurch eine eindeutig identifizierbare Struktur vorliegt. Insbesondere beinhaltet ein solches Muster einen Informationsgehalt in Form eines maschinenlesbaren Codes. Erfindungsgemäss wird der Begriff "Code" als Abbildung von Daten mittels binärer Symbolelemente verstanden, bspw. ein Strichcode.

Mit einem Multiplexhologramm lässt sich in an sich bekannter Weise ein winkelaufgelöstes Intensitätsmuster aus einer gebeugten Referenzlichtwelle rekonstruieren. Dabei ist nur für jeweils einen diskreten Einfallswinkel der Referenzlichtwelle jeweils ein Intensitätsmuster mit maximaler Intensität rekonstruierbar. Es hat sich nun herausgestellt, dass sich diese Winkelauflösung auch beim Messen eines Winkels zwischen zwei räumlich voneinander entfernten Elementen praktisch anwenden lässt. Unter Berücksichtigung des Informationsgehalts des Intensitätsmusters lässt sich nämlich dem Intensitätsmuster sehr schnell und in eineindeutiger Weise ein Einfallswinkel einer Objektlichtwelle auf die Hologrammebene des Multiplexhologramms zuordnen. Aufgrund der nicht-kontinuierlichen Winkelverteilung ergibt sich eine unstetige -quasi digitale- Zuordnung von Einfallswinkeln und Intensitätsmustern. Die Zuordnung erfolgt dabei aufgrund des Informationsgehalts eines Musters. Aus der räumlichen Ausrichtung der Hologrammebene bezüglich eines ersten Elements sowie aus der räumlichen Ausrichtung des die gebeugte Referenzlichtwelle erfassenden Lichtdetektors bezüglich eines zweiten Elements lässt sich unter Verwendung bestehender, bewährter und robuster Techniken der Geodäsie bzw. der industriellen Vermessungstechnik ein Winkel zwischen dem ersten Element und dem zweiten Element berechnen. Eine verfeinerte Winkelbestimmung kann erfindungsgemäss u.a. erreicht werden, indem zusätzlich die Stärke der Intensität eines Intensitätsmusters erfasst wird, da sich auch innerhalb eines gewissen Winkelbereichs um den jeweiligen Einfallswinkel noch von der Maximalintensität unterschiedene Intensitäten erfassen lassen. Durch den Vergleich mit der bekannten Maximalintensität ist eine Abweichung vom diskreten Einfallswinkel quantifizierbar. Bei einer ausreichend grossen Anzahl an unabhängigen Interferenzmustern ergibt sich eine Anordnung von Intensitätsmustern, die dicht genug ist, um eine quasi-kontinuierliche Winkelauflösung zu erhalten.

Vorteilhafte Weiterbildungen der Erfindung ergeben sich aus den Merkmalen der abhängigen Ansprüche.

Vorteilhafterweise werden Koordinaten der zweiten Elementebene in einem Bezugskoordinatensystem angegeben; Koordinaten des zugeordneten Einfallswinkels werden im Bezugskoordinatensystem angegeben; und im Schritt h) wird der Winkel aus der Differenz der Koordinaten der zweiten Elementebene und der Koordinaten des zugeordneten Einfallswinkels berechnet.

Da das Multiplexhologramm in einer bekannten festen räumlichen Beziehung zur ersten Elementebene des ersten Elements angeordnet ist, und der Lichtdetektor ebenfalls in einer bekannten festen räumlichen Beziehung zur zweiten Elementebene des zweiten Elements angeordnet ist, reicht es somit aus, die Koordinaten der zweiten Elementebene und die Koordinaten des zugeordneten Einfallswinkels in ein und demselben Bezugskoordinatensystem anzugeben, um den Winkel einfach und eindeutig zu berechnen.

Weitere Vorteile und Merkmale der Erfindung sind aus der folgenden Beschreibung von derzeit bevorzugten Ausführungsformen im Zusammenhang mit den anhängenden Figuren beispielhaft ersichtlich:
Figur 1 zeigt einen Teil einer ersten Ausführungsform eines Multiplexhologramms mit mehreren Interferenzmustern;
Figur 2 zeigt einen Teil der Ausführungsform eines Multiplexhologramms nach Figur 1 beim Erfassen eines Intensitätsmusters;
Figur 3 zeigt einen Teil einer ersten Ausführungsform eines Intensitätsmusters eines Multiplexhologramms nach Figur 1 und 2;
Figur 4 zeigt einen Teil einer zweiten Ausführungsform eines Intensitätsmusters eines Multiplexhologramms nach Figur 1 und 2;
Figur 5 zeigt einen Teil einer dritten Ausführungsform eines Intensitätsmusters eines Multiplexhologramms nach Figur 1 und 2;
Figur 6 zeigt einen Teil einer vierten Ausführungsform eines Intensitätsmusters eines Multiplexhologramms nach Figur 1 und 2;
Figur 7 zeigt einen Winkelaufnehmer nach Figur 1 und/oder einen Lichtdetektor nach Figur 2 in Datenkommunikation mit einem Teil einer Ausführungsform einer Auswerteeinheit;
Figur 8 zeigt ein Flussdiagramm der Schritte des Verfahrens;
Figur 9 zeigt einen Teil einer ersten Ausführungsform eines Systems zum Durchführen des Verfahrens nach Figur 8 mit einem Multiplexhologramm nach Figur 1 und 2;
Figur 10 zeigt einen Teil einer zweiten Ausführungsform eines Systems zum Durchführen des Verfahrens nach Figur 8 mit einem Multiplexhologramm nach Figur 1 und 2;
Figur 11 zeigt einen Teil einer dritten Ausführungsform eines Systems zum Durchführen des Verfahrens nach Figur 8 mit einem Multiplexhologramm nach Figur 1 und 2;
Figur 12 zeigt einen Teil einer vierten Ausführungsform eines Systems zum Durchführen des Verfahrens nach Figur 8 mit einem Multiplexhologramm nach Figur 1 und 2;
Figur 13 zeigt einen Teil einer ersten Ausführungsform eines Lichtdetektors zum Durchführen des Verfahrens nach Figur 8, mit einem Intensitätsmuster, das einen Rollwinkel aufweist;
Figur 14 zeigt einen Teil einer zweiten Ausführungsform eines Lichtdetektors zum Durchführen des Verfahrens nach Figur 8, mit Graustufenkeil im Intensitätsmuster;
Figur 15 zeigt einen Teil einer dritten Ausführungsform eines Lichtdetektors zum Durchführen des Verfahrens nach Figur 8, mit einem Intensitätsmuster, das bei unterschiedlichen Winkeln und damit mit unterschiedlichen Bragg-Intensitäten erfasst wird;
Figur 16 zeigt einen Teil einer vierten Ausführungsform eines Lichtdetektors zum Durchführen des Verfahrens nach Figur 8, mit zwei Intensitätsmuster, die mit maximaler Bragg-Intensität erfasst werden; und
Figur 17 zeigt einen Teil einer fünften Ausführungsform eines Lichtdetektors mit zwei Sensoren zum Durchführen des Verfahrens nach Figur 8.

Das Multiplexhologramm 3 besteht aus einem Speichermaterial mit mehreren Interferenzmustern 31, 31', 31". Das Speichermaterial wird beispielsweise mit einem optischen Interferenzmuster 31, 31', 31" beleuchtet oder mit einem digitalen Interferenzmuster 31, 31', 31" bedruckt. Andere Arten des Bereitstellens eines Multiplexhologramms 3, wie das Prägen von Interferenzmustern 31, 31', 31" in ein Speichermaterial, usw. sind ebenfalls möglich.

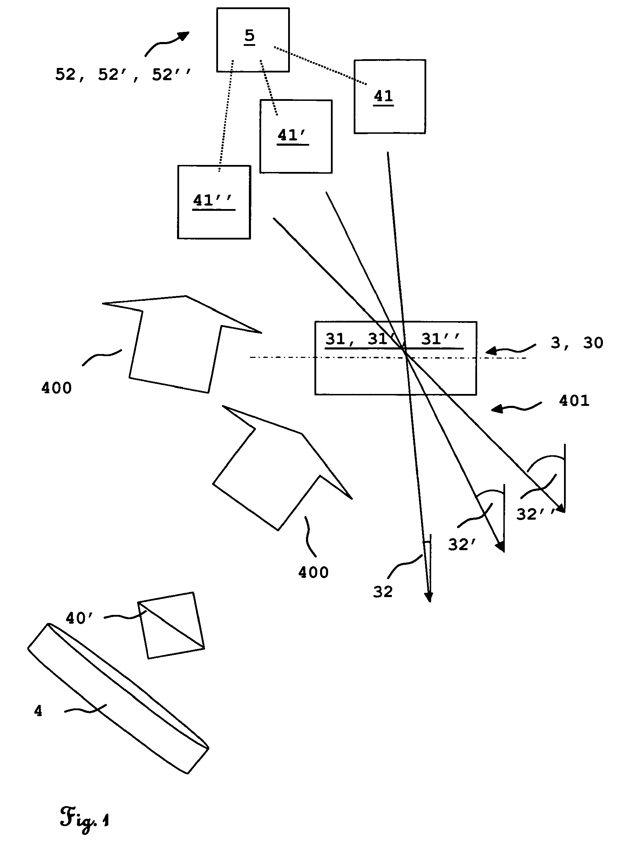

Figur 1 zeigt das Beleuchten des Speichermaterials mit einem optischen Interferenzmuster 31, 31', 31". Dafür wird eine kohärente Lichtquelle wie ein Helium Neon-Laser, ein Argon-Laser, eine Neodym-Laserdiode, eine Bogen- oder Halogenlampe, usw. mit einer Referenzlichtwelle 400 im sichtbaren oder infraroten Spektralbereich verwendet. Die Lichtquelle 4 erzeugt eine Referenzlichtwelle 400, die über einen Strahlteiler 40 geteilt wird. Ein Teil der Referenzlichtwelle 400 wird auf aufzuzeichnende Objekte 41, 41', 41" gelenkt, ein Teil der Referenzlichtwelle 400 wird auf eine Hologrammebene 30 des Multiplexhologramms 3 gelenkt. Die Referenzlichtwelle 400 wird von den Objekten 41, 41', 41" reflektiert und trifft unter einem Einfallswinkel 32, 32', 32" als Objektlichtwelle 401 auf die Hologrammebene 30. Der Einfallswinkel 32, 32', 32" ist der Winkel zwischen der Objektlichtwelle 401 und der Normalen der Hologrammebene 30. Die Überlagerung von Referenzlichtwelle 400 und Objektlichtwelle 401 erzeugt im Speichermaterial eine Vielzahl von Interferenzmustern 31, 31', 31" in Funktion der Einfallswinkel 32, 32', 32" der an den Objekten 41, 41', 41" reflektierten Objektlichtwelle 401.

Die Anzahl der Interferenzmuster 31, 31', 31" der Hologrammebene 30 ist durch die Bragg'sche Gleichung beschränkt. Jedes Objekt 41, 41', 41" wird unter einem eineindeutigen Einfallswinkel 32, 32', 32" aufgezeichnet. Im Verständnis der vorliegenden Erfindung wird der Begriff "eineindeutig" so verwendet, dass sich alle Einfallswinkel 32, 32', 32" voneinander unterscheiden. Nach der Bragg'schen Gleichung steigt die Winkelauflösung mit der Dicke des Speichermaterials. Daher sind so genannte Volumenhologramme zu bevorzugen, bei denen eine Dicke des Speichermaterials größer als die Wellenlänge der Lichtquelle 4 ist. In einer Volumeneinheit des Multiplexhologramm 3 lassen sich mehrere zehn Interferenzmuster 31, 31', 31", vorzugsweise mehrere hundert Interferenzmuster 31, 31', 31", vorzugsweise mehrere tausend Interferenzmuster 31, 31', 31" überlagern und einzeln auslesen.

Im figürlich nicht dargestellten Drucken von digitalen Interferenzmustern werden digitale Interferenzmuster 31, 31', 31" in einem Computer synthetisch bereitgestellt und durch einem dem Drucken ähnlichen Verfahren in das holografische Speichermaterial geschrieben. Digitale Interferenzmuster 31, 31', 31" benötigen somit keine physikalisch reellen Objekte. Solche Multiplexhologramme sind kostengünstig, die Herstellkosten betragen rund 0.5€ pro Zentimeter². Von der Funktion her sind digitale Interferenzmuster 31, 31', 31" und optische Interferenzmuster 31, 31', 31" gleichwertig.

Die Interferenzmuster 31, 31', 31" geben einen Einfallswinkel 32, 32', 32" mit mindestens einer Winkelkoordinate an, wie eine Azimutwinkel-Koordinate θ oder eine Polarwinkel-Koordinate ϕ. Die Interferenzmuster 31, 31', 31" lassen sich mit einer Wellenlänge oder mit mehreren Wellenlängen der Lichtquelle 4 bereitstellen. So können zum Beispiel Interferenzmuster mit einer ersten Wellenlänge die Azimutwinkel-Koordinate θ eines Einfallswinkels angeben und Interferenzmuster mit einer zweiten, von der ersten verschiedenen Wellenlänge können die Polarwinkel-Koordinate ϕ dieses Einfallswinkels angeben.

Für ein Speichermaterial von einem bis mehrere Millimeter Dicke liegt die Winkelauflösung des Multiplexhologramms 3 gemäß der Bragg'schen Gleichung im Bereich von 0.1mrad bis 1.0mrad, vorzugsweise bei 0.3mrad. Der Winkelumfang des Multiplexhologramms 3 beträgt 0.1rad bis nrad. Bei einer Winkelauflösung von 0.3mrad und unter Verwendung von beispielsweise 3333 gleichartigen Interferenzmustern 31, 31', 31" beträgt der Winkelumfang somit 1rad.

Mindestens ein Multiplexhologramm 3 ist am Element 1 angeordnet. Bei Kenntnis der vorliegenden Erfindung lassen sich natürlich auch mehrere Multiplexhologramme 3 am ersten Element 1 anordnen, von denen jedes einen anderen Winkelbereich abdeckt. Beispielsweise deckt ein erstes Multiplexhologramm 3 einen Winkelbereich von 0 bis 1rad ab, ein zweites Multiplexhologramm 3 deckt einen Winkelbereich von 1 bis 2rad ab, ein drittes Multiplexhologramm 3 deckt einen Winkelbereich von 2 bis 3rad ab, usw..

Für das Bereitstellen eines solchen winkelaufgelösten Multiplexhologramms 3 wird von jedem Objekt 41, 41', 41" ein entsprechender Einfallswinkel 32,-32', 32" von einem Winkelaufnehmer 5 erfasst. In einer ersten Variante des Verfahrens wird ein Winkelsignal 52, 52', 52" gebildet, das eine Paarung des Objekts 41, 41', 41" und dessen Einfallswinkel 32, 32', 32" umfasst. Das Winkelsignal 52, 52', 52" kann auch weitere Informationen wie Höhe und Breite der Glockenkurve der Bragg-Intensität I von Intensitätsmustern 61, 61', 61", usw. umfassen. Das Winkelsignal 52, 52', 52" wird computerlesbar datengespeichert. In einer zweiten Variante des Verfahrens gibt ein Informationsgehalt des Objekts 41, 41', 41" den Einfallswinkel 32, 32', 32" an.

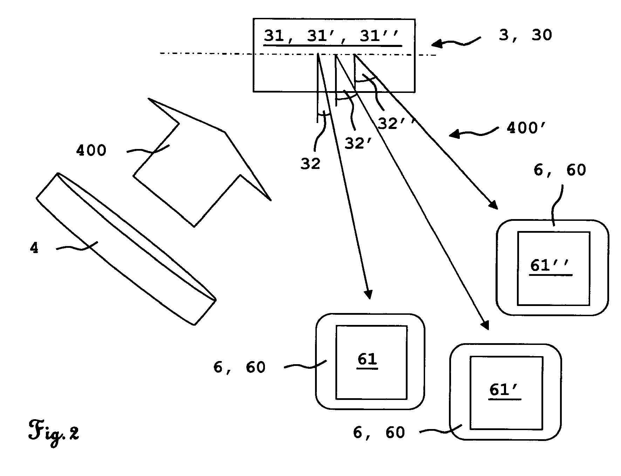

Figur 2 zeigt das Rekonstruieren eines Intensitätsmusters 61, 61', 61". Dazu wird ein Multiplexhologramm 3 mit Referenzlichtwelle 400 beleuchtet und eine vom Interferenzmuster 31, 31', 31" gebeugte Referenzlichtwelle 400' wird von einem Lichtdetektor 6 als Intensitätsmuster 61, 61', 61" erfasst. Das Rekonstruieren des Intensitätsmuster 61, 61', 61" erfolgt in Funktion des Einfallswinkels 32, 32', 32", d.h. der Lichtdetektor 6 muss unter dem Einfallswinkel 32, 32', 32" eines Interferenzmusters 31, 31', 31" zum Multiplexhologramm 3 angeordnet sein, um ein Intensitätsmuster 61, 61', 61" zu erfassen.

Die Lichtquelle 4 kann kontinuierlich oder gepulst betrieben werden. Bei einem Pulsbetrieb kann eine Pulsweitenmodulation zur Übertragung von mindestens einer Zusatzinformation erfolgen. Die Lichtquelle 4 überträgt mit dem Beleuchten des Multiplexhologramms 3 mit Referenzlichtwelle 400 eine Zusatzinformation wie der Typ des Multiplexhologramms 3, die Version der Interferenzmuster 31, 31', 31", ein Winkelsignal 52, 52', 52", eine Umgebungstemperatur, usw. zum Lichtdetektor 6, was das Verfahren noch eindeutiger und robust macht. Die Lichtquelle 4 weist vorteilhafterweise ein breites Band von Wellenlängen von Lichtwellen auf, von denen das Multiplexhologramm 3 zumindest eine Wellenlänge einer Referenzlichtwelle 400 mit hohem Wirkungsgrad beugt. Bei Volumenhologrammen kann Weißlicht verwendet werden.

Der Lichtdetektor 6 weist mindestens einen Sensor 60, 60' wie einen Charge-Coupled Device (CCD) Sensor oder einen Complementary Metal Oxide Semiconductor (CMOS) Sensor auf. Der Lichtdetektor 6 erfasst das Intensitätsmuster 61, 61', 61" in einer Detektorebene. Der Lichtdetektor 6 erfasst mindestens die Wellenlänge der gebeugten Referenzlichtquelle 400' und bildet das Intensitätsmuster 61, 61', 61". Der Lichtdetektor 6 kann Filter aufweisen, um das Intensitätsmuster 61, 61', 61" bei Verwendung von mehreren Wellenlängen der Lichtquelle 4 in eindeutiger Weise zu bilden. Der Lichtdetektor 6 erfasst die gebeugte Referenzlichtwelle 400' aufgrund der durch die Bragg'schen Gleichung vorgegebenen Winkelauflösung des Multiplexhologramms 3 mit unterschiedlicher Bragg-Intensität I über einen kleinen Winkelbereich des Einfallswinkels 32, 32', 32". D.h. der Lichtdetektor 6 kann die erfasste Bragg-Intensität I innerhalb eines Winkelbereichs beispielsweise durch Aufsummieren der erfassten Photonen je Pixel des Sensors 60 messen. Die Bragg-Intensität I hat etwa die Form einer Glockenkurve, im Zentrum des Winkelbereichs ist die erfasste Bragg-Intensität I der gebeugten Referenzlichtwelle 400' maximal.

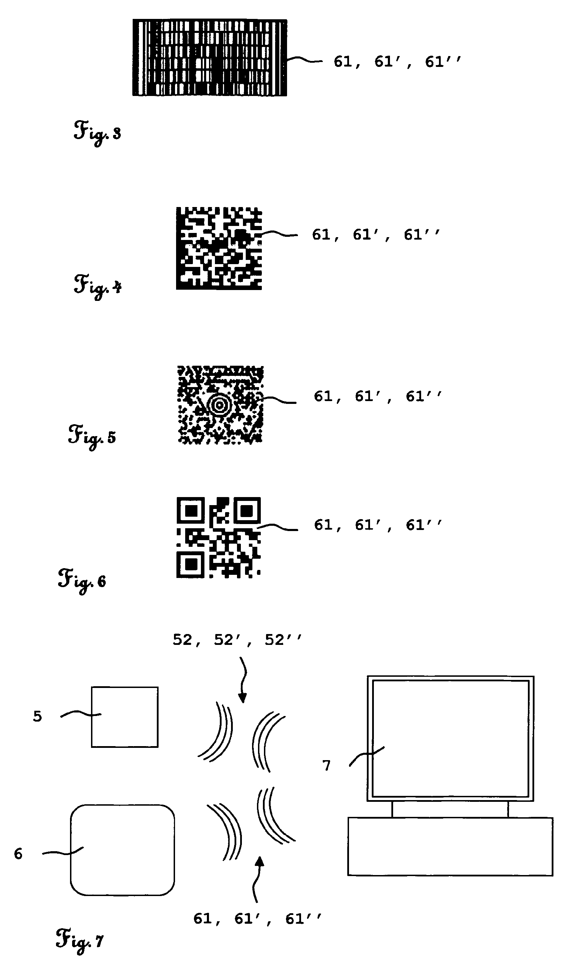

Die Figuren 3 bis 6 zeigen vier beispielhafte Ausführungsformen von Intensitätsmustern 61, 61', 61", die weitgehend identisch sind mit den ihnen zugrunde liegenden Objekt 41, 41', 41". Dabei handelt es sich um an sich bekannte optoelektronisch lesbare Balkencodes.

Figur 3 zeigt ein Intensitätsmuster 61, 61', 61" in der Ausführungsform eines zweidimensionalen Codablock F-Codes mit mehreren Zeilen von eindimensionalen Strichcodes. Der Codablock F-Codes ist gemäß der Norm ISO/IEC 15417 der Internationalen Organisation für Normung (ISO) normiert und kann zwei bis 44 Zeilen aufweisen. Pro Codablock F-Code lassen sich bis zu 1KByte kodieren.

Figur 4 zeigt ein Intensitätsmuster 61, 61', 61" in der Ausführungsform eines zweidimensionalen DataMatrix-Codes mit einer quadratischen oder rechteckigen Fläche als Muster von quadratischen oder runden Symbolelementen. Der DataMatrix-Code ist gemäß der Norm ISO/IEC 16022 normiert. Pro DataMatrix-Code lassen sich mehr als 1KByte kodieren.

Figur 5 zeigt ein Intensitätsmuster 61, 61', 61" in der Ausführungsform eines zweidimensionalen MaxiCodes mit sechseckigen Symbolelementen und einem zentralen Suchmuster in Form von drei konzentrischen Kreisen. Das Suchmuster ist gut sichtbar und ermöglicht eine eindeutige Zentrierung des Lichtdetektors 6 und eine Korrektur von Verzerrungen im erfassten Intensitätsmuster. Der MaxiCode hat einen geringen Informationsgehalt von rund 50Byte. Durch das Suchmuster ist der MaxiCode aber sehr schnell und zuverlässig zu lesen.

Figur 6 zeigt ein Intensitätsmuster 61, 61', 61" in der Ausführungsform eines zweidimensionalen QuickResponse-Codes mit einer quadratischen Matrix mit quadratischen Symbolelementen. Der QuickResponse-Code ist gemäß der Norm ISO/IEC 18004:2006 normiert. Er weist Synchronisationmarkierungen in den Ecken der Matrix auf, die eine eindeutige Orientierung des Intensitätsmusters ermöglichen, so dass Anfang und Ende des QuickResponse-Codes eindeutig feststellbar sind. Der Informationsgehalt des QuickResponse-Codes ist sehr hoch und beträgt knapp 3KByte.

Bei Kenntnis der vorliegenden Erfindung lassen sich andere, nicht dargestellte Intensitätsmuster verwenden. So lassen sich nicht nur Intensitätsmuster mit schwarzen und weißen Symbolelementen verwenden, sondern es lassen sich auch Symbolelemente mit acht, sechzehn, und mehr verschiedenen Graustufen verwenden, was den Informationsgehalt der Intensitätsmuster weiter erhöht. Auch kann der Fachmann Intensitätsmuster mit unterschiedlich großen Symbolelementen verwenden, so dass größere Symbolelemente eines Intensitätsmusters aus großer Entfernung von mehreren hundert Metern eindeutig erfassbar sind, während kleinere Symbolelemente des Intensitätsmusters aus kleiner Entfernung von weniger als fünfzig Metern eindeutig erfassbar sind.

Fig. 7 zeigt eine Datenkommunikation zwischen einem Winkelaufnehmer 5 mit einer Auswerteeinheit 7 und/oder zwischen einem Lichtdetektor 6 und einer Auswerteeinheit 7. In einer ersten Variante des Verfahrens übermittelt der Winkelaufnehmer 5 Winkelsignale 52, 52', 52" an die Auswerteeinheit 7, und der Lichtdetektor 6 übermittelt Intensitätsmuster 61, 61', 61" an die Auswerteeinheit 7. Beispielsweise werden die Winkelsignale 52, 52', 52" einmalig zu Beginn des Verfahrens an die Auswerteeinheit 7 übermittelt. In einer zweiten Variante des Verfahrens übermittelt nur der Lichtdetektor 6 Intensitätsmuster 61, 61', 61" an die Auswerteinheit 7. Beispielsweise werden die augenblicklich, in Echtzeit erfassten Intensitätsmuster 61, 61', 61" an die Auswerteeinheit 7 übermittelt.

Die Datenkommunikation ist bidirektional und kann kabelgestützt oder funkgestützt erfolgen. Bei kabelgestützter oder funkgestützter Datenkommunikation wird ein Protokoll wie das Transmission Control Protocol/Internet-Protokoll (TCP/IP) verwendet. Kabelgestützte Datenkommunikation erfolgt über einen Datenbus wie Ethernet, USB, usw.. Funkgestützte Datenkommunikation erfolgt über ein Funknetz wie Enhanced Data Rate for GSM Evolution (EDGE), Asymetric Digital Subscriber Line (ADSL), Institute of Electrical and Electronics Engineers (IEEE) 802.11, usw.. Sowohl der Winkelaufnehmer 5, der Lichtdetektor 6 als auch die Auswerteeinheit 7 weisen entsprechende Schnittstellen für die Datenkommunikation auf. Bei Kenntnis der vorliegenden Erfindung kann der Fachmann auch den Lichtdetektor mit im Gehäuse integrierter Auswerteeinheit als eine einzige Einheit ausführen.

Die Auswerteeinheit 7 weist einen Mikroprozessor und einen computerlesbaren Datenspeicher auf. Das Computerprogramm-Mittel wird aus dem computerlesbaren Datenspeicher der Auswerteeinheit 7 in den Mikroprozessor der Auswerteeinheit 7 geladen und ausgeführt. Die Auswerteeinheit 7 kann ein ortsfester Computer wie ein Personalcomputer (PC) oder ein mobiler Computer wie ein Laptop, Smartphone, usw. sein.

In der ersten Variante des Verfahrens ordnet das Computerprogramm-Mittel jedem übermittelten Intensitätsmuster 61, 61', 61" ein entsprechendes Winkelsignal 52, 52', 52" zu. Dazu vergleicht das Computerprogramm-Mittel den Balkencode eines Intensitätsmusters 61, 61', 61" mit denjenigen der Objekte 41, 41', 41" gemäß der Winkelsignale 52, 52', 52". Bei Übereinstimmen des Balkencodes eines Intensitätsmusters 61, 61', 61" mit demjenigen eines Objekts 41, 41', 41" wird dem Intensitätsmuster 61, 61', 61" der Einfallswinkel 32, 32', 32" des Objekt 41, 41', 41" gemäß Winkelsignal 52, 52', 52" zugeordnet.

In der zweiten Variante des Verfahrens liest das Computerprogramm-Mittel den Informationsgehalt des zweidimensionalen Balkencodes aus, welcher Informationsgehalt den Einfallswinkel 32, 32', 32" angibt. Dem Intensitätsmuster 61, 61', 61" wird dieser ausgelesene Einfallswinkel 32, 32', 32" zugeordnet.

Zum Durchführen des Verfahrens wird ein Multiplexhologramm 3 an einem ersten Element 1 angeordnet und der Lichtdetektor 6 wird an einem zweiten Element 2 angeordnet. Die an sich beliebig gestalteten Elemente 1, 2 sind räumlich voneinander entfernt, sie können weniger als einen Meter oder mehrere hundert Meter voneinander entfernt sein. Praktischerweise wird das Multiplexhologramm 3 außen am ersten Element 1 oder innen im ersten Element 1 angebracht, derart dass die Hologrammebene 30 des planaren Speichermaterials in einer bekannten festen räumlichen Beziehung zu einer ersten Elementebene 10 des ersten Elements 1 ausgerichtet ist. In entsprechender Weise wird der Lichtdetektor 6 außen am zweiten Element 2 angebracht, derart dass eine Detektorebene des Lichtdetektors 6 in einer bekannten festen räumlichen Beziehung zu einer zweiten Elementebene 20 des zweiten Elements 2 ausgerichtet ist. Der Lichtdetektor 6 selber kann auch das zweite Element 2 bilden. Ein an einem ersten Element 1 angeordnetes Multiplexhologramm 3 kann von mehreren an zweiten Elementen 2 angeordneten Lichtdetektoren 6 erfasst werden, derart, dass für jedes zweite Element 2 ein Winkel zwischen der ersten Elementebene 10 und der zweiten Elementebene 20 berechnet wird. Dies kann unabhängig voneinander und zeitversetzt oder auch zeitgleich erfolgen.

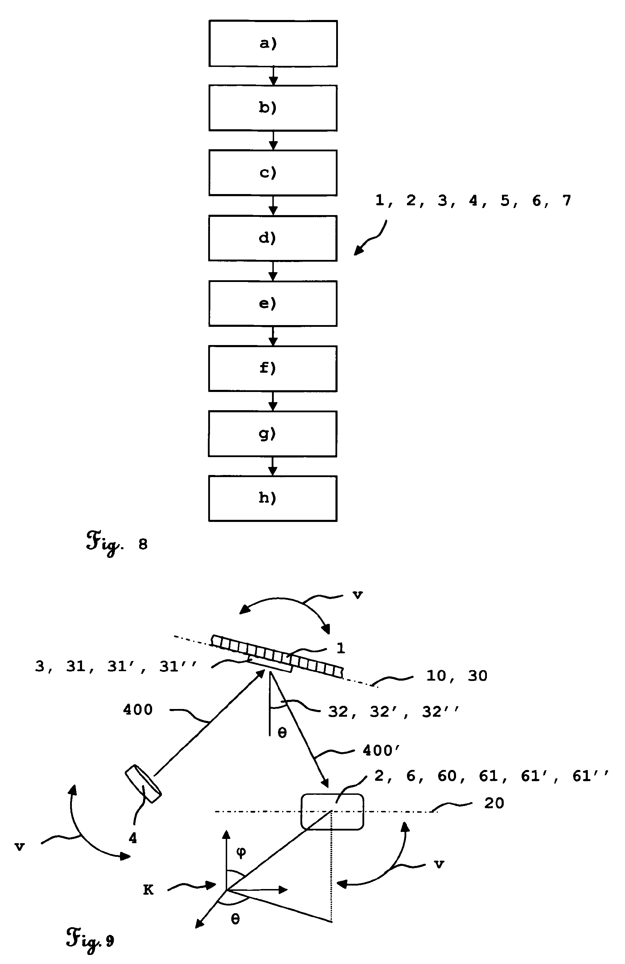

Figur 8 zeigt ein Flussdiagramm des Verfahrens zum Messen eines Winkels zwischen zwei räumlich voneinander entfernten Elementen 1, 2, mit den Schritten: a) Bereitstellen eines Multiplexhologramms 3 mit mehreren in einer Hologrammebene 30 angeordneten Interferenzmustern 31, 31', 31", mindestens zwei Interferenzmuster 31, 31', 31" weisen unterschiedliche Einfallswinkel 32, 32', 32" einer Objektlichtwelle 401 auf die Hologrammebene 30 auf, die Einfallswinkel 32, 32', 32" der Interferenzmuster 31, 31', 31" sind computerlesbar datengespeichert; b) Anordnen des Multiplexhologramms 3 in einer ersten Elementebene 10 an einem ersten Element 1; c) Beleuchten des Multiplexhologramms 3 mit einer Referenzlichtwelle 400; d) Anordnen eines Lichtdetektors 6 in einer zweiten Elementebene 20 an einem zweiten Element 2; e) Erfassen einer an einem Interferenzmuster 31, 31', 31" gebeugten Referenzlichtwelle 400' mit dem Lichtdetektor 6; f) Bilden eines Intensitätsmusters 61, 61', 61" aus der erfassten gebeugten Referenzlichtwelle 400'; g) Zuordnen des computerlesbar datengespeicherten Einfallswinkels 32, 32', 32" zum Intensitätsmuster 61, 61', 61"; und h) Berechnen eines Winkels zwischen der ersten Elementebene 10 und der zweiten Elementebene 20 aus dem zugeordneten Einfallswinkel 32, 32', 32".

Die Figuren 9 bis 12 zeigen vier beispielhafte Ausführungsformen eines Systems zum Durchführen des Verfahrens. Das System umfasst das Multiplexhologramm 3, die Lichtquelle 4, den Lichtdetektor 6 und die Auswerteeinrichtung 7. Das Multiplexhologramm 3 ist am ersten Element 1 angeordnet, die Hologrammebene 30 ist kongruent zur ersten Elementebene 10. Der Lichtdetektor 6 ist am zweiten Element 2 angeordnet, die Detektorebene ist kongruent zur zweiten Elementebene 20. Koordinaten der zweiten Elementebene 20 werden in einem Bezugskoordinatensystem K wie einem Polarkoordinatensystem, einem Kugelkoordinatensystem oder einem orthogonalen Koordinatensystem angegeben. Eine Azimutwinkel-Koordinate θ und/oder eine Polarwinkel-Koordinate ϕ des Winkels zwischen den Elementen 1, 2 wird gemessen. Das Bezugskoordinatensystem K kann ein relatives oder absolutes Koordinatensystem sein. Dem Intensitätsmuster 61, 61', 61" wird ein Einfallswinkel 32, 32', 32" zugeordnet. Die Koordinaten des zugeordneten Einfallswinkels 32, 32', 32" sind ebenfalls im Bezugskoordinatensystem K angegeben. Im Schritt h) wird der Winkel zwischen der ersten Elementebene 10 und der zweiten Elementebene 20 aus der Differenz der Koordinaten der zweiten Elementebene 20 und der Koordinaten des zugeordneten Einfallswinkels 32, 32', 32" berechnet. Die Azimutwinkel-Koordinate θ und die Polarwinkel-Koordinate ϕ des Winkels können gleichzeitig gemessen werden.

Bei Kenntnis der vorliegenden Erfindung kann der Fachmann das Multiplexhologramm 3 unter einem beliebigen, bekannten Anordnungswinkel am ersten Element 1 anordnen; die Kongruenz der Hologrammebene 30 zur ersten Elementebene 10 ist somit nicht zwingend. In gleicher Weise kann der Fachmann den Lichtdetektor 6 unter einem beliebigen, bekannten Anordnungswinkel am zweiten Element 2 anordnen; auch die Kongruenz der Detektorebene zur zweiten Elementebene 20 ist nicht zwingend.

Die Figuren 9 bis 12 zeigt ein Multiplexhologramm 3 in der Ausführungsform eines Reflexionshologramms, das die gebeugte Referenzlichtwelle 400' reflektiert. Das Multiplexhologramm 3, die Lichtquelle 4 und der Lichtdetektor 6 bilden Bestandteile eines Systems. Nach Figur 9 sind prinzipiell alle diese Bestandteile des Systems räumlich variabel zum Bezugskoordinatensystem platzierbar und ausrichtbar, was durch einen mit v (=variabel) bezeichneten gebogenen Pfeil dargestellt ist. Unter dem Begriff platzierbar wird eine beliebige räumliche Platzierung des Bestandteils des Systems im Bezugskoordinatensystem verstanden. Unter dem Begriff ausrichtbar wird eine beliebige Ausrichtung des Bestandteils des Systems im Bezugskoordinatensystem verstanden. Konkret ist jedoch immer eines dieser Bestandteile des Systems variabel angeordnet und zwei dieser Bestandteile des Systems sind ortsfest und mit fester Ausrichtung relativ zueinander angeordnet. Dies ist die grundlegende Ausführungsform der Erfindung. Dieses räumlich variable Ausrichten und Platzierung wird durch den Winkelumfang des Multiplexhologramms 3 begrenzt.

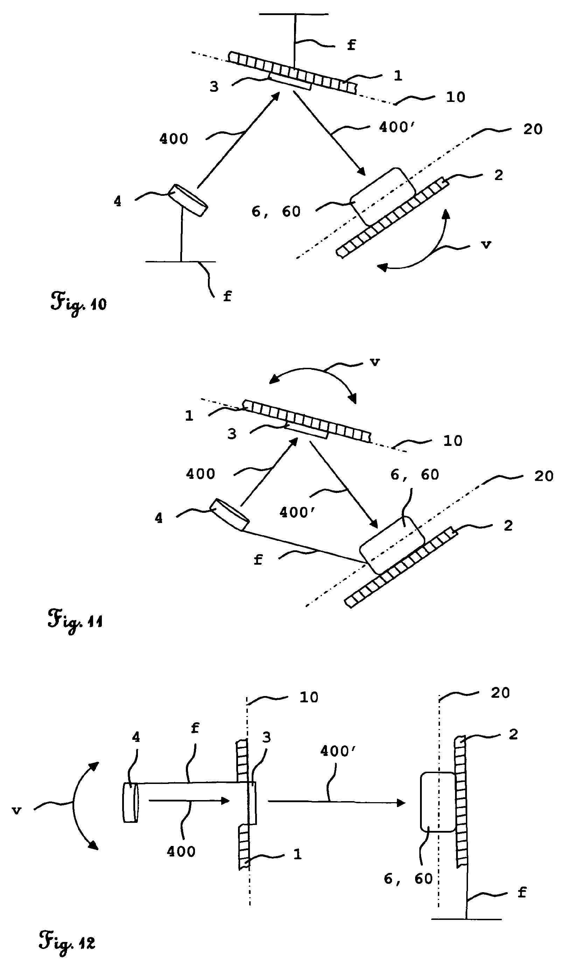

Nach Figur 10 sind die Lichtquelle 4 und das Multiplexhologramm 3 ortsfest angeordnet, was durch einen mit f (=fest) bezeichneten T-Träger dargestellt ist. Der Lichtdetektor 6 ist räumlich variabel platzierbar und ausrichtbar, wie mit dem Pfeil v dargestellt. Die Lichtquelle 4 beleuchtet das Multiplexhologramm 3 unter einem konstanten Referenzlichtwinkel.

Nach Figur 11 sind die Lichtquelle 4 und der Laserdetektor 6 mechanisch miteinander verbunden und ortsfest angeordnet, was durch eine mit f bezeichnete Linie dargestellt ist. Nur das Multiplexhologramm 3 ist räumlich variabel platzierbar und ausrichtbar, wie mit dem Pfeil v dargestellt. Die Lichtquelle 4 beleuchtet das Multiplexhologramm 3 unter einem konstanten Referenzlichtwinkel, der Lichtdetektor 6 erfasst die gebeugte Referenzlichtwelle 400' unter einem variablen Lichtdetektorwinkel, da das Multiplexhologramm 3 räumlich variabel platzierbar und ausrichtbar ist.

Figur 12 zeigt ein Multiplexhologramm 3 in der Ausführungsform eines Transmissionshologramms, das die gebeugte Referenzlichtwelle 400' transmittiert. Nach Figur 12 ist der Lichtdetektor 6 ortsfest angeordnet, was durch einen mit f bezeichneten T-Träger dargestellt ist. Die Lichtquelle 4 ist mechanisch mit dem Multiplexhologramm 3 verbunden, was durch eine mit f bezeichnete Linie dargestellt ist. Somit sind Lichtquelle 4 und Multiplexhologramm 3 gemeinsam räumlich variabel platzierbar und ausrichtbar, wie mit dem Pfeil v dargestellt. Die Lichtquelle 4 beleuchtet das Multiplexhologramm 3 unter einem konstanten Referenzlichtwinkel.

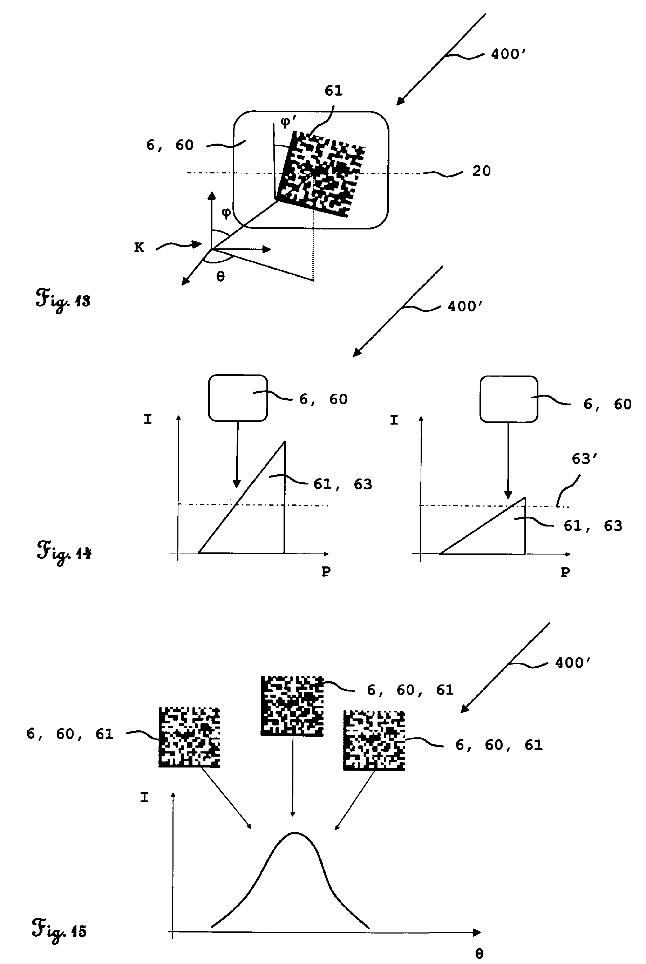

Nach Figur 13 wird im Schritt e) eine gebeugte Referenzlichtwelle 400' im Bezugskoordinatensystem K vom Lichtdetektor 6 in Funktion der Azimutwinkel-Koordinate θ erfasst und ein Intensitätsmusters 61 in der Ausführungsform eines Balkencodes erfasst. Ein Abweichen der räumlichen Ausrichtung des zweidimensionalen Balkencodes zum Bezugskoordinatensystem K wird als Rollwinkel ϕ' des Lichtdetektors 6 gemessen. Der Rollwinkel ist ein Verkippen der Detektorebene des Lichtdetektors 6 bezüglich der zweiten Elementebene 20. Der Rollwinkel ϕ' ist weiterer Freiheitsgrad beim Messen des Winkels zwischen den zwei Elementen 1, 2.

Beim Vergleich des Intensitätsmusters 61, 61', 61' mit dem Objekt 41, 41', 41" kann eine Verzerrung des Intensitätsmusters 61, 61', 61' festgestellt werden, beispielsweise wenn ein Intensitätsmuster 61, 61', 61' in der Ausführungsform eines MaxiCodes nach Figur 5 ein elliptisch verzerrtes Suchmuster aufweist, während der entsprechende MaxiCode des Objekts 41, 41', 41" ein kreisförmiges Suchmuster hat. Bereits aus der Größe und der Richtung einer solchen Verzerrung kann sehr rasch ein Winkel zwischen dem ersten Element 1 und dem zweiten Element 2 gemessen werden, ohne dass dem Intensitätsmuster 61, 61', 61" ein Einfallswinkels 32, 32', 32" zugeordnet werden muss. Natürlich kann das Suchmuster auch anders geformt verzerrt sein, so kann die Verzerrung quadratisch, trapezförmig, usw. sein.

Die Figuren 14 bis 17 zeigen mehrere Ausführungsformen des Erfassens einer gebeugten Referenzlichtwelle 400' mit dem Lichtdetektor 6 und des Bildens des Intensitätsmusters 61, 61', 61". Der Lichtdetektor 6 kann die erfasste Bragg-Intensität I innerhalb eines Winkelbereichs beispielsweise durch Aufsummieren der erfassten Photonen je Pixel des Sensors 60 messen. Die Bragg-Intensität I variiert über den Winkelabstand eines Intensitätsmusters 61, 61', 61" und hat etwa die Form einer Glockenkurve, im Zentrum des Winkelbereichs ist die erfasste Bragg-Intensität I der gebeugten Referenzlichtwelle 400' maximal. Höhe und Breite der Glockenkurve der Bragg-Intensität I der aus der erfassten gebeugten Referenzlichtwelle 400' gebildeten Intensitätsmuster 61, 61', 61" sind bestimmbar und somit im Voraus bekannt und computerlesbar datengespeichert. Die Variation der erfassten Bragg-Intensität I mit dem Erfassungswinkel kann zu einer genaueren Bestimmung der Winkelauflösung der Intensitätsmusters 61, 61', 61" genutzt werden. Bei Kenntnis der Variation der Bragg-Intensität I in Abhängigkeit des Erfassungswinkels wird ein Winkel des aus der erfassten gebeugten Referenzlichtwelle 400' gebildeten Intensitätsmusters 61, 61', 61" mit einer höheren Winkelauflösung als ein Winkelabstand der Intensitätsmuster 61, 61', 61" bestimmt.

Der Einfallswinkel 32, 32', 32" kann in Funktion der Höhe und Breite der Glockenkurve der Bragg-Intensität I mit einer feinen Winkelauflösung zum Intensitätsmuster 61, 61', 61" zugeordnet werden. Diese feine Winkelauflösung des Systems kann so um etwa den Faktor Zehn erhöht werden. Das Intensitätsmuster 61, 61', 61" wird computerlesbar datengespeichert.

Nach Figur 14 weist das Intensitätsmuster 61 einen Graukeil 63 auf, der je nach Azimutwinkel-Koordinate θ mit unterschiedlicher Bragg-Intensität I erfasst wird. Der Lichtdetektor 6 misst die erfasste Bragg-Intensität I des Graukeils 63 bei verschiedenen Positionen P im Intensitätsmuster 61 und vergleicht die gemessene Bragg-Intensität I des Graukeils 63 mit einem vordefiniertem Schwellenwert 63'. Die Position im Intensitätsmuster, an dem der Graukeil 63 den Schwellenwert 63' überschreitet, ist proportional zur Bragg-Intensität I und gibt damit eine Information über die Abweichung des Winkels von dem Winkel mit maximaler Bragg-Intensität I.

Nach den Figuren 15 bis 17 wird eine gebeugte Referenzlichtwelle 400' im Bezugskoordinatensystem K in Funktion der Azimutwinkel-Koordinate θ erfasst. Über einen kleinen Winkelbereich ist die erfasste Bragg-Intensität I der gebeugten Referenzlichtwelle 400' veränderlich, im Zentrum des Winkelbereichs ist sie maximal, was in den Figuren 15 bis 17 durch eine Intensitätskurve dargestellt ist.

Nach Figur 15 ist ein aus der erfassten gebeugten Referenzlichtwelle 400' Intensitätsmuster 61 in der Ausführungsform eines Balkencodes im Zentrum des Winkelbereichs am intensivsten, was durch einen dunklen Balkencode im Zentrum des Winkelbereichs dargestellt ist, zwei Balkencodes außerhalb des Zentrums sind vergleichsweise heller dargestellt.

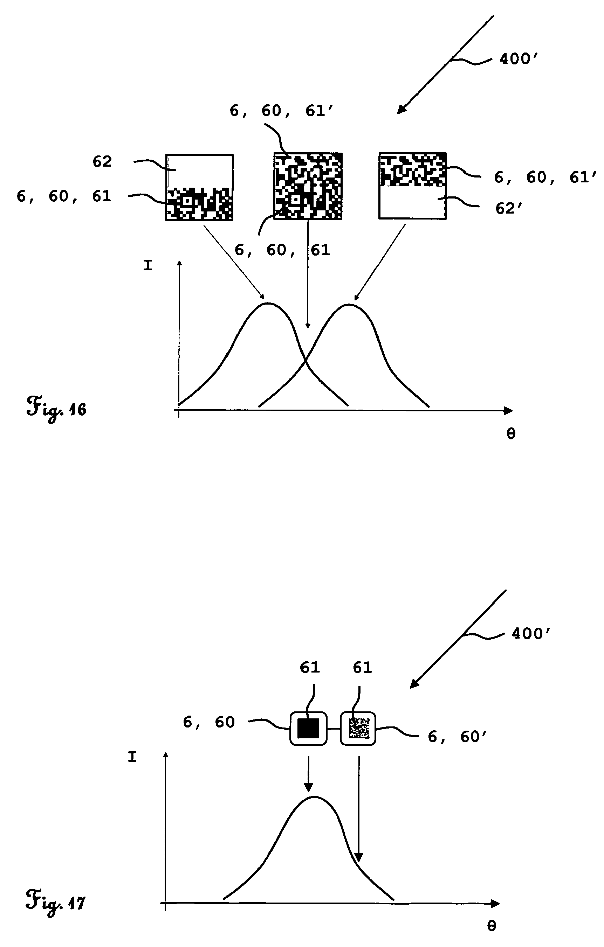

Nach Figur 16 weist das Multiplexhologramm 3 eine Anordnung von Interferenzmustern 31, 31', 31" nach Figur 1 auf. Für unterschiedliche Azimutwinkel-Koordinaten θ werden verschiedene Intensitätsmuster 61, 61' erfasst. Bei maximaler Bragg-Intensität I wird nur ein einziges Intensitätsmuster 61, 61' abgebildet. Im Übergang zwischen zwei Intensitätsmustern 61, 61' von aneinandergrenzenden Azimutwinkel-Koordinaten θ ist die Bragg-Intensität I der gebeugten Referenzlichtwelle 400' geringer und zwei Intensitätsmuster 61, 61' werden abgebildet.

Nach Figur 17 erfasst ein Lichtdetektor 6 mit zwei Sensoren 60, 60' die gebeugte Referenzlichtwelle 400'. Die beiden Sensoren 60, 60' des Lichtdetektors 6 sind weitgehend baugleich und stehen in einem bekannten festen räumlichen Intersensorabstand zueinander. Beispielsweise sind die beiden Sensoren 60, 60' im Intersensorabstand von 1/3 des Winkelbereichs der Bragg-intensive Winkelauflösung des Multiplexhologramms 3 zueinander angeordnet.

Das aus gebeugten Referenzlichtwelle 400' Intensitätsmuster 61 in der Ausführungsform eines Balkencodes ist im Zentrum des Winkelbereichs am intensivsten und außerhalb des Zentrums vergleichsweise heller dargestellt. Der Unterschied in der ermittelten Helligkeit kann zur Ermittlung des Winkels mit höherer Genauigkeit genutzt werden.

Es ist auch denkbar, dass der Abstand größer ist als der Winkelbereich der Bragg-Winkelauflösung. In diesem Fall empfangen beide Detektoren unterschiedliche Intensitätsmuster, welche unterschiedlichen Winkeln bezüglich des Multiplexhologramms 3 entsprechen. Gemäß der aus der Geodäsie bekannten Triangulation lässt sich aus dem Einfallswinkel 32, 32', 32" und dem Intersensorabstand in einfacher Weise eine Distanz zwischen dem ersten Element 1 und dem zweiten Element 2 berechnen.

Das System lässt sich mit einer bestehenden Vorrichtung zur Elektronischen Distanzmessung (EDM) kombinieren, bei der mittels Laufzeitmessung oder Phasenverschiebung von elektromagnetischen oder akustischen Wellen eine Distanz zwischen dem ersten Element 1 und dem zweiten Element 2 gemessen wird. Die Genauigkeit der EDM liegt bei geodätischen Distanzen im mm-Bereich.

Das System lässt sich aber auch mit weiteren bestehenden Vorrichtungen kombinieren. Beispielsweise wird mindestens ein Multiplexhologramm 3 an einer mobilen Tastvorrichtung angebracht. Das erste Element 1 ist als mobile Tastvorrichtung ausgeführt.
- In einer ersten Ausführungsform weist eine handgehaltene Tastvorrichtung eine Tastspitze zum oberflächlichen Berühren eines abzutastenden Objekts auf. Die Tastspitze wird an mehreren Oberflächen des Objekts aufgesetzt und je nach Form der Oberflächen des Objekts ändert sich die räumliche Ausrichtung der Tastspitze. Tastspitze und Multiplexhologramm 3 stehen in einer starren Beziehung zueinander.
- In einer zweiten Ausführungsform weist die Tastvorrichtung einen handgeführten Laserscanner zum berührungslosen Abscannen eines Objekts auf. Vom Laserscanner erzeugtes Laserlicht wird von Oberflächen des Objekts reflektiert und von einem CCD Sensor des Laserscanners erfasst. Die Berechnung der Distanz zwischen den Oberflächen des Objekts und der Tastvorrichtung erfolgt mittels Triangulation. Beim Abscannen kann der Laserscanner seine räumliche Ausrichtung ändern. Laserscanner und Multiplexhologramm 3 stehen in einer starren Beziehung zueinander.
- In einer weiteren Ausführungsform weist die Tastvorrichtung ein Befestigungsmittel zum Befestigen an einem Objekt auf. Je nach räumlicher Ausrichtung des Objekts, ändert die räumliche Ausrichtung des Befestigungsmittels. Befestigungsmittel und Multiplexhologramm 3 stehen in einer starren Beziehung zueinander.

Die sich ändernde räumliche Ausrichtung des Multiplexhologramms 3 der mobilen Tastvorrichtung wird vom zweiten Element 2 erfasst, indem das Multiplexhologramm 3 mit Referenzlichtwelle 400' beleuchtet wird und der Lichtdetektor 6 die am Interferenzmuster 31, 31', 31" gebeugte Referenzlichtwelle 400' erfasst und ein Intensitätsmuster 61, 61', 61" abbildet. Durch Zuordnen eines Einfallswinkels 32, 32', 32" zum Intensitätsmuster 61, 61', 61" lässt sich der Winkel zwischen der ersten Elementebene 10 und der zweiten Elementebene 20 berechnen.

Das Multiplexhologramm 3 der Tastvorrichtung kann plan oder gebogen sein. Mehrere Multiplexhologramme 3, vier, sechs, acht, zehn oder noch mehr Multiplexhologramme 3 können an der Tastvorrichtung angebracht sein, um ein Beleuchten eines Multiplexhologramms 3 und Erfassen von gebeugter Referenzlichtwelle 400' von möglichst vielen unterschiedlichen räumlichen Ausrichtungen der Tastvorrichtung zu ermöglichen. Bei Kenntnis der vorliegenden Erfindung kann das Multiplexhologramme 3 natürlich auch an anderen mobilen dreidimensionalen Messinstrumenten wie einem Cognitens^{™} OptiGo, Cognitens^{™} OptiCell, Cognitens^{™} WLS400, usw. angebracht werden.

Beispielsweise wird mindestens ein Multiplexhologramm 3 an einer Baumaschine wie einem Bagger, einem Lader, einer Raupe, einem Grader, usw. angebracht. Das erste Element 1 ist als Baumaschine ausgeführt. Bei Kenntnis der vorliegenden Erfindung kann der Fachmann das Multiplexhologramm 3 auch an einem Bestandteil einer Baumaschine, wie einem Gelenk, einem Werkzeug, usw. anbringen.

Beispielsweise wird mindestens ein Multiplexhologramm 3 ortsfest an einem statischen Objekt wie einer Wand, einem Mast, Vermessungsstab, usw. angebracht. Das erste Element 1 ist als statisches Objekt ausgeführt. Mit mehreren im Raum koordiniert an statischen Objekten angebrachten Multiplexhologrammen 3 erfolgt eine Standortbestimmung des zweiten Elements 2 mittels Rückwärtseinschneiden. Das zweite Element 2 ist eine mobile Messvorrichtung wie ein Scanner, Tracker, Rotationslaser, Totalstation, usw.. Auch das Multiplexhologramm 3 des statischen Objekts kann plan oder gebogen sein; so kann es den Umfang eine äußere Mantelfläche eines Vermessungsstabs in Teilen oder vollständig umfassen. Das Multiplexhologramm 3 des statischen Objekts kann im Freien und in geschlossenen Räumen sowohl bei erdgebundener Vermessung als auch bei luftgestützter Vermessung verwendet werden. Das Multiplexhologramm 3 kann direkt oder über Prismen indirekt angezielt werden, um einen versteckten Zielpunkt zu vermessen.

Beispielsweise wird ein System mit mindestens einem Multiplexhologramm 3, einer Lichtquelle 4, einem Lichtdetektor 6 und einer Auswerteeinheit 7 als Winkelencoder verwendet. Das Multiplexhologramm 3 ist an einem ersten Element 1 in der Ausführung eines dynamischen Objektes wie einem Gelenk, artikulierten Arm, Roboterarm, usw. angebracht. Das Multiplexhologramm3 kann plan oder gebogen sein.

Beispielsweise wird mindestens ein Multiplexhologramm 3 an einer Koordinatenmessmaschine angebracht. Das erste Element 1 ist als Koordinatenmessmaschine ausgeführt. Mindestens eine Kamera wie eine Einzelkamera oder eine Stereokamera überwacht das Multiplexhologramm3. Die Kamera entspricht dem zweiten Element 2. Die sich ändernde räumliche Ausrichtung des Multiplexhologramms 3 der Tastvorrichtung wird vom zweiten Element 2 erfasst, indem das Multiplexhologramm 3 mit Referenzlichtwelle 400' beleuchtet wird und der Lichtdetektor 6 die am Interferenzmuster 31, 31', 31" gebeugte Referenzlichtwelle 400' erfasst und ein Intensitätsmuster 61, 61', 61" gebildet. Dem Intensitätsmuster 61, 61', 61" wird ein Einfallswinkel 32, 32', 32" zugeordnet. Die Koordinatenmessmaschine lässt sich kurzfristig oder langfristig überwachen. Bei einer kurzfristigen Überwachung werden über sich ändernde Einfallswinkel 32, 32', 32" Deformationen im Betrieb der Koordinatenmessmaschine ermittelt, so lassen sich durch die Anfahrdynamik verursachte Deformationen in Echtzeit ermitteln und eliminieren. Bei einer langfristigen Überwachung wird über sich ändernde Einfallswinkel 32, 32', 32" Materialermüdung im Betrieb der Koordinatenmessmaschine ermittelt.

Beispielsweise wird mindestens ein Multiplexhologramm 3 an einem Referenzobjekt einer Koordinatenmessmaschine angebracht. Das Kalibrierobjekt kann ein Referenzelement, ein Messtisch, usw. sein. Das erste Element 1 ist als Kalibrierobjekt ausgeführt. Zum Kalibrieren der Koordinatenmessmaschine wird die räumliche Ausrichtung des Multiplexhologramms 3 vom zweiten Element 2 erfasst, indem das Multiplexhologramm 3 mit der Referenzlichtwelle 400' beleuchtet wird und der Lichtdetektor 6 die am Interferenzmuster 31, 31', 31" gebeugte Referenzlichtwelle 400' erfasst und ein Intensitätsmuster 61, 61', 61" gebildet. Dem Intensitätsmuster 61, 61', 61" wird mindestens ein Einfallswinkel 32, 32', 32" zugeordnet. Das zweite Element 2 wird derart in eine Kalibrierposition bewegt, bis der zugeordnete Einfallswinkel 32, 32', 32" einer vordefinierten Kalibrierwinkel entspricht.

Es versteht sich, dass diese dargestellten Figuren nur mögliche Ausführungsformen schematisch darstellen. Die verschiedenen Ansätze können ebenso miteinander sowie mit Verfahren und Geräten des Standes der Technik kombiniert werden.

## Patentansprüche

1. Verfahren zum Messen eines Winkels zwischen zwei räumlich voneinander entfernten Elementen (1, 2), mit einem:
. Bereitstellen eines Multiplexhologramms (3) mit mehreren in einer Hologrammebene (30) angeordneten unabhängigen Interferenzmustern (31, 31', 31"), mindestens zwei Interferenzmuster (31, 31', 31") weisen unterschiedliche Einfallswinkel (32, 32', 32") einer Objektlichtwelle (401) auf der Hologrammebene (30) auf, die Einfallswinkel (32, 32', 32") sind computerlesbar datengespeichert;
. Anordnen des Multiplexhologramms (3) in einer ersten Elementebene (10) an einem ersten Element (1);
. Beleuchten des Multiplexhologramms (3) mit einer Referenzlichtwelle (400);
. Anordnen eines Lichtdetektors (6) in einer zweiten Elementebene (20) an einem zweiten Element (2);
. Erfassen einer an einem Interferenzmuster (31, 31', 31") gebeugten Referenzlichtwelle (400') mit dem Lichtdetektor (6);
. Bilden eines Intensitätsmusters (61, 61', 61") aus der erfassten gebeugten Referenzlichtwelle (400');
. Zuordnen des computerlesbar datengespeicherten Einfallswinkels (32, 32', 32") zum Intensitätsmuster (61, 61', 61"); und
. Berechnen eines Winkels zwischen der ersten Elementebene (10) und der zweiten Elementebene (20) aus dem zugeordneten Einfallswinkel (32, 32', 32").

2. Verfahren nach Anspruch 1, **dadurch gekennzeichnet, dass** die unterschiedlichen Einfallswinkel (32, 32', 32") untereinander einer diskreten, nicht-kontinuierlichen Verteilung unterliegen und in einer Einheit des Multiplexhologramms (3) eine diskrete Anzahl an unabhängigen Interferenzmustern (31, 31', 31") überlagert ist, die sich einzeln auslesen lassen.

3. Verfahren nach Anspruch 1 oder 2, **dadurch gekennzeichnet, dass** ein Intensitätsmuster (61, 61', 61") eine flächig ausgedehnte Anordnung einer Vielzahl von Formen ist, die eindeutig von der Restfläche unterscheidbar sind, wobei ein Intensitätsmuster (61, 61', 61") einen maschinenlesbaren Informationsgehalt, insbesondere in Form eines Codes, aufweist.

4. Verfahren nach einem der vorherigen Ansprüche, **dadurch gekennzeichnet, dass** Koordinaten der zweiten Elementebene (20) in einem Bezugskoordinatensystem (K) angegeben werden; dass Koordinaten des zugeordneten Einfallswinkels (32, 32', 32") im Bezugskoordinatensystem (K) angegeben werden;
und dass im Schritt h) der Winkel aus der Differenz der Koordinaten der zweiten Elementebene (20) und der Koordinaten des zugeordneten Einfallswinkels (32, 32', 32") berechnet wird.

5. Verfahren nach einem der vorhergehenden Ansprüche, **dadurch gekennzeichnet, dass** ein Bezugskoordinatensystem (K) mit einer Azimutwinkel-Koordinate (θ) und einer Polarwinkel-Koordinate (ϕ) verwendet wird;
und dass im Schritt h) die Azimutwinkel-Koordinate (θ) und die Polarwinkel-Koordinate (ϕ) des Winkels gleichzeitig gemessen werden.

6. Verfahren nach einem der vorhergehenden Ansprüche, **dadurch gekennzeichnet, dass** ein Winkelsignal (52, 52', 52") computerlesbar datengespeichert wird, welches den Einfallswinkel (32, 32', 32") aufweist und welches ein Objekt (41, 41', 41") aufweist;
dass im Schritt g) das Intensitätsmuster (61, 61', 61") mit den computerlesbaren datengespeicherten Objekten (41, 41', 41") verglichen wird; und
dass bei Übereinstimmen des Intensitätsmusters (61, 61', 61") mit einem Objekt (41, 41', 41"), dem Intensitätsmuster (61, 61', 61") der Einfallswinkel (32, 32', 32") dieses Objekts (41, 41', 41") zugeordnet wird.

7. Verfahren nach einem der vorhergehenden Ansprüche, **dadurch gekennzeichnet, dass** im Schritt c) mindestens eine der folgenden Zusatzinformationen:
. ein Typ des Multiplexhologramms (3),
. eine Version der Interferenzmuster (31, 31', 31"),
. ein Winkelsignal (52, 52', 52")
von der Lichtquelle (4) zum Lichtdetektor (6) übertragen wird.

8. Verfahren nach einem der vorhergehenden Ansprüche, **dadurch gekennzeichnet, dass** als Intensitätsmusters (61, 61', 61") ein zweidimensionaler Balkencode verwendet wird, insbesondere wobei
. im Schritt g) ein Informationsgehalt des zweidimensionalen Balkencodes ausgelesen wird, welcher Informationsgehalt den Einfallswinkel (32, 32', 32") angibt; und dem Intensitätsmuster (61, 61', 61") dieser ausgelesene Einfallswinkel (32, 32', 32") zugeordnet wird, oder
. im Schritt e) eine gebeugte Referenzlichtwelle (400') in einem Bezugskoordinatensystem (K) erfasst wird; und ein Abweichen einer räumlichen Ausrichtung des zweidimensionalen Balkencodes zum Bezugskoordinatensystem (K) als Rollwinkel (ϕ') des Lichtdetektors (6) gemessen wird.

9. Verfahren nach einem der vorhergehenden Ansprüche, **dadurch gekennzeichnet, dass** im Schritt c) das Multiplexhologramm (3) unter einem konstanten Referenzlichtwinkel mit der Referenzlichtwelle (400) beleuchtet wird und/oder dass im Schritt c) das Multiplexhologramm (3) unter einem konstanten Referenzlichtwinkel von einer ortsfesten Referenzlichtquelle (4) mit der Referenzlichtwelle (400) beleuchtet wird.

10. Verfahren nach einem der vorhergehenden Ansprüche, **dadurch gekennzeichnet, dass** im Schritt e) die gebeugte Referenzlichtwelle (400') unter einem konstanten Lichtdetektorwinkel von einem ortsfesten Lichtdetektor (6) erfasst wird.

11. Verfahren nach einem der vorhergehenden Ansprüche, **dadurch gekennzeichnet, dass** eine Bragg-Intensität (I) der erfassten gebeugten Referenzlichtwelle (400') erfasst wird;
und dass bei Kenntnis einer Variation der Bragg-Intensität (I) in Abhängigkeit des Erfassungswinkels, ein Winkel des aus der erfassten gebeugten Referenzlichtwelle (400') gebildeten Intensitätsmusters (61, 61', 61") mit einer höheren Winkelauflösung als ein Winkelabstand der Intensitätsmuster (61, 61', 61") bestimmt wird.

12. Verfahren nach einem der vorhergehenden Ansprüche, **dadurch gekennzeichnet, dass** ein in der ersten Elementebene (10) am ersten Element (1) angeordnetes Multiplexhologramm (3) von mehreren, in zweiten Elementebenen (20) an zweiten Elementen (2) angeordneten Lichtdetektoren (6) erfasst wird; und
dass aus dem zugeordneten Einfallswinkel (32, 32', 32") für jedes zweite Element (2) ein Winkel zwischen der ersten Elementebene (10) und der zweiten Elementebene (20) gemessen werden.

13. Verwendung eines Multiplexhologramms (3) zum Durchführen des Verfahrens nach einem der Ansprüche 1 bis 12, wobei das erste Element (1) als mindestens eine der folgenden Vorrichtungen ausgeführt ist:
. eine mobile Tastvorrichtung,
. eine Baumaschine,
. ein statisches Objekt,
. ein dynamisches Objekt,
. eine Koordinatenmessmaschine,
. eine Kalibrierobjekt einer Koordinatenmessmaschine.

14. System zum Durchführen des Verfahrens nach einem der Ansprüche 1 bis 12 geeignet ist, **dadurch gekennzeichnet,**
i) **dass** das System ein Multiplexhologramm (3) aufweist,
. mit mehreren unabhängigen Interferenzmustern (31, 31', 31");
ii) **dass** mindestens zwei Interferenzmuster (31, 31', 31") des Multiplexhologramms (3) unterschiedliche Einfallswinkel (32, 32', 32") einer Objektlichtwelle (401) auf eine Hologrammebene (30) aufweisen;
. welche Einfallswinkel (32, 32', 32") computerlesbar datengespeichert sind;
iii)**dass** das Multiplexhologramm (3) in einer ersten Elementebene (10) an einem ersten Element (1) angeordnet ist;
iv) **dass** das System eine Lichtquelle (4) aufweist,
. die das Multiplexhologramm (3) mit einer Referenzlichtwelle (400) beleuchtet;
v) **dass** das System einen Lichtdetektor (6) aufweist,
. der in einer zweiten Elementebene (20) an einem zweiten Element (2) angeordnet ist;
. der eine an einem Interferenzmuster (31, 31', 31") gebeugten Referenzlichtwelle (400') erfasst; und
. der ein Intensitätsmuster (61, 61', 61") aus der erfassten gebeugten Referenzlichtwelle (400') bildet; und
vi) **dass** das System eine Auswerteeinheit (7) aufweist,
. die den computerlesbar datengespeicherten Einfallswinkel (32, 32', 32") zum Intensitätsmuster (61, 61', 61") zuordnet; und
. die einen Winkel zwischen der ersten Elementebene (10) und der zweiten Elementebene (20) aus dem zugeordneten Einfallswinkel (32, 32', 32") berechnet.

15. Computerprogrammprodukt, umfassend ein Computerprogramm-Mittel, das geeignet ist das Verfahren nach einem der Ansprüche 1 bis 12
dadurch zu implementieren, dass mindestens einer der Schritte g) und h) ausgeführt wird, wenn das Computerprogramm-Mittel in einen Mikroprozessor einer Auswerteeinheit (7) geladen wird.

## Claims

1. A method for measuring an angle between two spatially separated elements (1, 2), having:
- providing a multiplex hologram (3) having multiple independent interference patterns (31, 31', 31") arranged in a hologram plane (30), at least two interference patterns (31, 31', 31") have different angles of incidence (32, 32', 32") of an object light wave (401) on the hologram plane (30), the angles of incidence (32, 32', 32") are stored as data in a computer-readable manner;
- arranging the multiplex hologram (3) in a first element plane (10) on a first element (1);
- illuminating the multiplex hologram (3) using a reference light wave (400);
- arranging a light detector (6) in a second element plane (20) on a second element (2);
- acquiring a reference light wave (400'), which is diffracted on an interference pattern (31, 31', 31"), using the light detector (6);
- forming an intensity pattern (61, 61', 61") from the acquired diffracted reference light wave (400');
- assigning the computer-readable angle of incidence (32, 32', 32"), which is stored as data, to the intensity pattern (61, 61', 61"); and
- calculating an angle between the first element plane (10) and the second element plane (20) from the assigned angle of incidence (32, 32', 32").

2. The method as claimed in claim 1, **characterized in that** the different angles of incidence (32, 32', 32") are subject to a discrete, non-continuous distribution to one another and a discrete number of independent interference patterns (31, 31', 31"), which may be read out individually, are superimposed in a unit of the multiplex hologram (3).

3. The method as claimed in claim 1 or 2, **characterized in that** an intensity pattern (61, 61', 61") is a flatly extending arrangement of a plurality of shapes, which can be unambiguously differentiated from the remaining surface, wherein an intensity pattern (61, 61', 61") has a machine-readable information content, in particular in the form of a code.

4. The method as claimed in any one of the preceding claims, **characterized in that** coordinates of the second element plane (20) are specified in a reference coordinate system (K); coordinates of the assigned angle of incidence (32, 32', 32") are specified in the reference coordinate system (K); and, in step h), the angle is calculated from the difference of the coordinates of the second element plane (20) and the coordinates of the assigned angle of incidence (32, 32', 32").

5. The method as claimed in any one of the preceding claims, **characterized in that** a reference coordinate system (K) having an azimuth angle coordinate (θ) and a polar angle coordinate (ϕ) is used;
and, in step h), the azimuth angle coordinate (θ) and the polar angle coordinate (ϕ) of the angle are measured simultaneously.

6. The method as claimed in any one of the preceding claims, **characterized in that** an angle signal (52, 52', 52") is stored as data in a computer-readable manner, which has the angle of incidence (32, 32', 32") and which has an object (41, 41', 41");
in step g), the intensity pattern (61, 61', 61") is compared to the computer-readable data-stored objects (41, 41', 41"); and
in the event of correspondence of the intensity pattern (61, 61', 61") to an object (41, 41', 41"), the angle of incidence (32, 32', 32") of this object (41, 41', 41") is assigned to the intensity pattern (61, 61', 61").

7. The method as claimed in any one of the preceding claims, **characterized in that**, in step c), at least one of the following items of auxiliary information:
- a type of the multiplex hologram (3),
- a version of the interference patterns (31, 31', 31"),
- an angle signal (52, 52', 52")
is transmitted from the light source (4) to the light detector (6).

8. The method as claimed in any one of the preceding claims, **characterized in that** a two-dimensional barcode is used as the intensity pattern (61, 61', 61"), in particular wherein
- in step g) an information content of the two-dimensional barcode is read out, this information content specifying the angle of incidence (32, 32', 32"); and this read-out angle of incidence (32, 32', 32") is assigned to the intensity pattern (61, 61', 61"), or
- in step e) a diffracted reference light wave (400') is acquired in a reference coordinate system (K); and a deviation of a spatial alignment of the two-dimensional barcode to the reference coordinate system (K) is measured as a roll angle (ϕ') of the light detector (6).

9. The method as claimed in any one of the preceding claims, **characterized in that**, in step c), the multiplex hologram (3) is illuminated at a constant reference light angle using the reference light wave (400) and/or, in step c), the multiplex hologram (3) is illuminated at a constant reference light angle by a stationary reference light source (4) using the reference light wave (400).

10. The method as claimed in any one of the preceding claims, **characterized in that**, in step e), the diffracted reference light wave (400') is acquired at a constant light detector angle by a stationary light detector (6).

11. The method as claimed in any one of the preceding claims, **characterized in that** a Bragg intensity (I) of the acquired diffracted reference light wave (400') is acquired;
and, if a variation of the Bragg intensity (I) as a function of the acquisition angle is known, an angle of the intensity pattern (61, 61', 61"), which is formed from the acquired diffracted reference light wave (400'), is determined at a higher angle resolution than an angle spacing of the intensity pattern (61, 61', 61").

12. The method as claimed in any one of the preceding claims, **characterized in that** a multiplex hologram (3), which is arranged in the first element plane (10) on the first element (1), is acquired by multiple light detectors (6), which are arranged in second element planes (20) on second elements (2); and
an angle between the first element plane (10) and the second element plane (20) is measured from the assigned angle of incidence (32, 32', 32") for each second element (2).

13. A use of a multiplex hologram (3) for carrying out the method as claimed in any one of claims 1 to 12, wherein the first element (1) is embodied as at least one of the following devices:
- a mobile scanning device,
- a construction machine,
- a static object,
- a dynamic object,
- a coordinate measuring machine,
- a calibration object of a coordinate measuring machine.

14. A system for carrying out the method as claimed in any one of claims 1 to 12, **characterized in that**
i) the system has a multiplex hologram (3),
- having multiple independent interference patterns (31, 31', 31") arranged in a hologram plane (30);
ii) at least two interference patterns (31, 31', 31") of the multiplex hologram (3) have different angles of incidence (32, 32', 32") of an object light wave (401) on the hologram plane (30);
- said angles of incidence (32, 32', 32") being stored as data in a computer-readable manner;
iii) the multiplex hologram (3) is arranged in a first element plane (10) on a first element (1);
iv) the system has a light source (4),
- which illuminates the multiplex hologram (3) using a reference light wave (400);
v) the system has a light detector (6),
- which is arranged in a second element plane (20) on a second element (2);
- which acquires a reference light wave (400') diffracted on an interference pattern (31, 31', 31"); and
- which forms an intensity pattern (61, 61', 61") from the acquired diffracted reference light wave (400'); and
vi) the system has an analysis unit (7),
- which assigns the computer-readable angle of incidence (32, 32', 32"), which is stored as data, to the intensity pattern (61, 61', 61"); and
- which calculates an angle between the first element plane (10) and the second element plane (20) from the assigned angle of incidence (32, 32', 32").

15. A computer program product, comprising a computer program means, which is suitable for implementing the method as claimed in any one of claims 1 to 12 in that at least one of steps g) and h) is executed when the computer program means is loaded into a microprocessor of an analysis unit (7).

## Revendications

1. Procédé de mesure d'un angle entre deux éléments éloignés spatialement l'un de l'autre (1, 2) avec :
• mise à disposition d'un hologramme multiplexe (3) avec plusieurs motifs d'interférence (31, 31',31") indépendants placés dans un plan d'hologramme (30), au moins deux motifs d'interférence (31, 31', 31") présentent différents angles d'incidence (32, 32', 32"') d'une onde de lumière d'objet (401) sur le plan de l'hologramme (30), les angles d'incidence (32, 32', 32"') sont mémorisés de manière lisible par ordinateur ;
• placement de l'hologramme multiplexe (3) dans un premier plan d'élément (10) sur un premier élément (1) ;
• éclairage de l'hologramme multiplexe (3) avec une onde de lumière de référence (400) ;
• placement d'un détecteur de lumière (6) dans un second plan d'élément (20) sur un second élément (2) ;
• détection d'une onde de lumière de référence diffractée (400') sur un motif d'interférence (31, 31', 31") avec le détecteur de lumière (6) ;
• formation d'un motif d'intensité (61, 61', 61") à partir de l'onde de lumière de référence diffractée détectée (400') ;
• assignation de l'angle d'incidence mémorisé de manière lisible par ordinateur (32, 32', 32") au motif d'intensité (61, 61', 61") et
• calcul d'un angle entre le premier plan d'élément (10) et le second plan d'élément (20) à partir de l'angle d'incidence assigné (32, 32', 32").

2. Procédé selon la revendication 1, **caractérisé en ce que** les différents angles d'incidence (32, 32', 32") sont soumis entre eux à une distribution discrète discontinue et un nombre discret de motifs d'interférence indépendants (31, 31', 31") qui peuvent être extraits individuellement est superposé dans une unité de l'hologramme multiplexe (3).

3. Procédé selon la revendication 1 ou 2, **caractérisé en ce qu'**un motif d'intensité (61, 61', 61") est un arrangement étendu en surface d'une multitude de formes clairement différenciables du reste de la surface, cependant qu'un motif d'intensité (61, 61', 61") présente un contenu d'information lisible par machine, en particulier sous forme de code.

4. Procédé selon l'une des revendications précédentes, **caractérisé en ce que** des coordonnées du second plan d'élément (20) sont indiquées dans un système de coordonnées de référence (K), que des coordonnées de l'angle d'incidence assigné (32, 32', 32") sont indiquées dans le système de coordonnées de référence (K) et qu'à l'étape h) l'angle est calculé à partir de la différence des coordonnées du second plan d'élément (20) et des coordonnées de l'angle d'incidence assigné (32, 32', 32").

5. Procédé selon l'une des revendications précédentes, **caractérisé en ce qu'**un système de coordonnées de référence (K) avec une coordonnée d'angle d'azimut (θ) et une coordonnée d'angle polaire (ϕ) est utilisé et qu'à l'étape h) la coordonnée d'angle d'azimut (θ) et la coordonnée d'angle polaire (ϕ) de l'angle sont mesurées simultanément.

6. Procédé selon l'une des revendications précédentes, **caractérisé en ce qu'**un signal d'angle (52, 52', 52"') qui présente l'angle d'incidence (32, 32', 32") et qui présente un objet (41, 41', 41") est mémorisé de manière lisible par ordinateur, qu'à l'étape g) le motif d'intensité (61, 61', 61") est comparé aux objets mémorisés de manière lisible par ordinateur (41, 41', 41") et que, lors de la concordance du motif d'intensité (61, 61', 61") avec un objet (41, 41', 41"), l'angle d'incidence (32, 32', 32") de cet objet (41, 41', 41") est associé au motif d'intensité (61, 61', 61").

7. Procédé selon l'une des revendications précédentes, **caractérisé en ce qu'**à l'étape c) au moins l'une des informations supplémentaires suivantes :
u n type d'hologramme multiplexe (3),
u ne version des motifs d'interférence (31, 31', 31"),
u n signal d'angle (52, 62', 52")
est transmis par la source de lumière (4) au détecteur de lumière (6).

8. Procédé selon l'une des revendications précédentes, **caractérisé en ce qu'**un code-barres bidimensionnnel est utilisé comme motif d'intensité (61, 61', 61"), en particulier cependant
· qu'à l'étape g) un contenu d'information du code-barres bidimensionnel est extrait, lequel contenu d'information indique l'angle d'incidence (32, 32', 32") et que cet angle d'incidence extrait (32, 32', 32") est assigné au motif d'intensité (61, 61', 61") ou
· qu'à l'étape e) une onde diffractée de lumière de référence (400') est détectée dans un système de coordonnées de référence (K) et une divergence d'une orientation spatiale du code-barres bidimensionnel par rapport au système de coordonnées de référence (K) est mesurée comme angle de roulis (ϕ') du détecteur de lumière (6).

9. Procédé selon l'une des revendications précédentes, **caractérisé en ce qu'**à l'étape c) l'hologramme multiplexe (3) est éclairé avec l'onde de lumière de référence (400) selon un angle de lumière de référence constant et/ou qu'à l'étape c) l'hologramme multiplexe (3) est éclairé avec l'onde de lumière de référence (400) par une source de lumière de référence stationnaire (4) selon un angle de lumière de référence.constant.

10. Procédé selon l'une des revendications précédentes, **caractérisé en ce qu'**à l'étape e) l'onde diffractée de lumière de référence (400') est détectée par un détecteur de lumière stationnaire (6) selon un angle de détecteur de lumière constant.

11. Procédé selon l'une des revendications précédentes, **caractérisé en ce qu'**il est détecté une intensité de Bragg (I) de l'onde diffractée de lumière de référence détectée (400') et qu'en connaissant une variation de l'intensité de Bragg (I) en fonction de l'angle de détection, un angle du motif d'intensité (61, 61', 61") formé à partir de l'onde diffractée de lumière de référence détectée (400') est déterminé avec une résolution angulaire plus élevée qu'une distance angulaire des motif d'intensité (61, 61', 61").

12. Procédé selon l'une des revendications précédentes, **caractérisé en ce qu'**un hologramme multiplexe (3) placé sur le premier élément (1) dans le premier plan d'élément (10) est détecté par plusieurs détecteurs de lumière (6) placés sur des seconds éléments (2) dans des seconds plans d'élément (20) et qu'un angle entre le premier plan d'élément (10) et le second plan d'élément (20) est mesuré à partir de l'angle d'incidence assigné (32, 32', 32") pour chaque second élément (2).

13. Utilisation d'un hologramme multiplexe (3) pour exécuter le procédé selon l'une des revendications 1 à 12, cependant que le premier élément (1) est réalisé comme au moins l'un des dispositifs suivants :
· un dispositif de palpage mobile,
· une machine de chantier,
· un objet statique,
· un objet dynamique,
· une machine de mesure de coordonnées,
· un objet d'étalonnage d'une machine de mesure de coordonnées.

14. Système qui est approprié pour exécuter le procédé selon l'une des revendications 1 à 12, caractérisé en ce
i) que le système présente un hologramme multiplexe (3) avec plusieurs motifs d'interférence indépendants (31, 31', 31") placés dans un plan d'hologramme (30),
(ii) qu'au moins deux motifs d'interférence (31, 31', 31") de l'hologramme multiplexe (3) présentent deux angles d'incidence différents (32, 32', 32") d'une onde de lumière d'objet (401) sur le plan de l'hologramme (30), lesquels angles d'incidence (32, 32', 32") sont mémorisés de manière lisible par ordinateur,
(iii) que l'hologramme multiplexe (3) est placé dans un premier plan d'élément (10) sur un premier élément (1),
iv) que le système présente une source de lumière (4) qui éclaire l'hologramme multiplexe (3) avec une onde de lumière de référence (400),
v) que le système présente un détecteur de lumière (6) qui est placé dans un second plan d'élément (20) sur un second élément (2), qui détecte une onde de lumière de référence (400') diffractée sur un motif d'interférence (31, 31', 31") et qui forme un motif d'intensité (61, 61', 61") à partir de l'onde de lumière de référence diffractée détectée (400') et
vi) que le système présente une unité d'exploitation (7) qui assigne l'angle d'incidence mémorisé de manière lisible par ordinateur (32, 32', 32") au motif d'intensité (61, 61', 61") et qui calcule un angle entre le premier plan d'élément (10) et le second plan d'élément (20) à partir de l'angle d'incidence assigné (32, 32', 32").

15. Produit de programme d'ordinateur comprenant un moyen de programme d'ordinateur qui est approprié pour mettre en oeuvre le procédé selon l'une des revendications 1 à 12 en ce qu'au moins l'une des étapes g) et h) est exécutée lorsque le moyen de programme d'ordinateur est chargé dans un microprocesseur d'une unité d'exploitation (7).
